# EUROPEAN PATENT SPECIFICATION

(11) **EP 2 393 369 B1**
(45) Date of publication and mention of the grant of the patent: **27.09.2017**
(21) Application number: 10702688.2
(22) Date of filing: 05.02.2010
(51) Int. Cl.: A23C 9/12, A23C 9/127, A23C 9/13

(54) **METHOD FOR PRODUCING AN ACIDIFIED MILK PRODUCT**
VERFAHREN ZUR HERSTELLUNG EINES SAUERMILCHPRODUKTS
PROCÉDÉ DE PRODUCTION D'UN PRODUIT LAITIER ACIDIFIÉ

(30) Priority: 05.02.2009 DK 200900178; 05.02.2009 DK 200900180
(43) Date of publication of application: 14.12.2011
(73) Proprietor: Chr. Hansen A/S, 2970 Hoersholm (DK)
(72) Inventor: QVIST, Karsten Bruun, DK-1814 Frederiksberg C (DK); TAMS, Jeppe Wegner, DK-2880 Bagsvaerd (DK); FAERGEMAND, Merete, Alleroed 3450 (DK); GARRIGUES, Christel, DK-1963 Frederiksberg C (DK); NIELSEN, Per Munk, DK-3400 Hilleroed (DK)
(74) Representative: Uexküll & Stolberg
(86) International application number: PCT/EP2010/051433
(87) International publication number: WO 2010/089376

(56) References cited:
- EP-A1- 0 711 504
- EP-A1- 0 745 670
- EP-A2- 1 197 152
- WO-A1-2007/060288
- WO-A1-2010/103126
- LORENZEN P C ET AL: "EFFECT OF ENZYMATIC CROSS-LINKING OF MILK PROTEINS ON FUNCTIONAL PROPERTIES OF SET-STYLE YOGHURT", INTERNATIONAL JOURNAL OF DAIRY TECHNOLOGY, SOCIETY OF DAIRY TECHNOLOGY, HUNTINGDON, GB, vol. 55, no. 3, 1 August 2002 (2002-08-01) , pages 152-157, XP001133824, ISSN: 1364-727X, DOI: DOI:10.1046/J.1471-0307.2002.00065.X
- FAERGEMAND M ET AL: "Transglutaminase: effect on instrumental and sensory texture of set style yoghurt", MILCHWISSENSCHAFT, VV GMBH VOLKSWIRTSCHAFTLICHER VERLAG. MUNCHEN, DE, vol. 54, no. 10, 1 January 1999 (1999-01-01), pages 563-566, XP008083032, ISSN: 0026-3788
- NEVE H ET AL: "EFFECTS OF TRANSGLUTAMINASE TREATMENT ON THE PRODUCTION OF SET SKIM MILK YOGHURT: MICROBIOLOGICAL ASPECTS", KIELER WIRTSCHAFTLICHE FORSCHUNGSBERICHTE, VERLAG TH. MANN, GELSENKIRCHEN, DE, vol. 53, no. 4, 1 January 2001 (2001-01-01), pages 347-361, XP008012307, ISSN: 0023-1347
- AMATAYAKUL T ET AL: "Physical characteristics of yoghurts made using exopolysaccharide-producing starter cultures and varying casein to whey protein ratios", INTERNATIONAL DAIRY JOURNAL, ELSEVIER APPLIED SCIENCE, BARKING, GB, vol. 16, no. 1, 1 January 2006 (2006-01-01), pages 40-51, XP002580679, ISSN: 0958-6946, DOI: DOI:10.1016/J.IDAIRYJ.2005.01.004 [retrieved on 2005-05-31]

## Description

### FIELD OF INVENTION

The present invention relates to a method for producing an acidified milk product using an enzyme having transglutaminase activity.

### BACKGROUND OF INVENTION

The market for acidified milk products, which includes fermented milk drinks and liquid yoghurt, is increasing worldwide and there is an interest in improving the quality and economics of this product. Acidified milk drinks are generally produced by mixing acidified milk with a sugar syrup solution, and subjecting the mixture to a homogenization treatment. Acidification may take place through addition of a chemical, such as glucono delta-lactone (GDL) or lactobionic acid (LBA), or it may be caused by fermentation of the milk with lactic acid bacteria.

The use of enzymes having transglutaminase activity for modification of food proteins, including dairy proteins, is known in the prior art. For instance, JP2835940-B2 describes manufacturing of a milk protein containing acid beverage, and shows that a milk drink comprising dissolved skim milk powder treated with transglutaminase, followed by chemical acidification, retains opaque white turbidity upon heat sterilization due to less precipitation of milk protein. EP0671885 describes a method for production of a milk like product comprising transglutaminase treatment followed by acidification. Herein, a transglutaminase treated milk like product where acidification is performed as a biological fermentation is shown to exhibit a consistency of a semi-solid yoghurt. Treatment with transglutaminase during the manufacturing of fermented milk products is known to increase the viscosity of the product. WO2007/060288 demonstrates that addition of transglutaminase during the production of fermented milk products such as yoghurt allows for reducing the protein content of the milk substrate to still obtain a yoghurt having a high viscosity.

EP 0 745 670 A1 describes a method for obtaining a stabilized transglutaminase enzyme and its use for the production of different products, such as yoghurt. According to the teaching of EP 0 745 670 A1, the transglutaminase enzyme is added to the milk substrate before start of the fermentation.

However, there are also problems associated with the use of TGase, one of the main problems being that it significantly increases the fermentation time of the fermented milk product. Typically a fermentation of milk at temperature 43C with the yoghurt culture YF-3331, takes around 5-7 hours. When the milk has been TGase treated the fermentation time increases to 8-10 hours (an increase of at least 20% in fermentation time).

It is an object of the present invention to provide a method for manufacturing of a fermented milk product, wherein the fermentation time is decreased. It is also an object to provide a fast method for manufacturing from a concentrated milk substrate a fermented milk drink, which is drinkable, i.e. a free-flowing liquid.

### SUMMARY OF INVENTION

The present inventors have surprisingly found that the fermentation time for a milk product wherein the milk substrate has been treated with a transglutaminase enzyme can be reduced significantly by adjusting the process and/or by adding specific ingredients to the milk substrate. This is especially surprising, because whereas it is known that some ingredients have a fermentation speed enhancing effect in fermentations of a milk substrate not treated with TGase, the present inventors have identified specific ingredients which can decrease the fermentation time significantly more for TGase treated milks than for the non-treated milks.

In accordance with this surprising finding, in one aspect, the present invention relates to a method for producing an acidified milk product, said method comprising:
a) providing a milk substrate;
b) treating the milk substrate with an enzyme having transglutaminase activity; and
c) fermenting the milk substrate with a microorganism;
wherein the enzyme having transglutaminase activity is added at least 30 minutes after the fermentation has started.

In a preferred aspect, the invention relates to a method for producing an acidified milk product, said method comprising:
a) providing a milk substrate;
b) treating the milk substrate with an enzyme having transglutaminase activity; and
c) fermenting the milk substrate with a microorganism;
wherein the enzyme having transglutaminase activity is added at least 30 minutes after the fermentation has started and wherein a protein hydrolyzate and/or a protease is added to the milk substrate.
The protein hydrolyzate and/or protease may be added to the milk substrate before or during step c), such as before, during or after step b).

The present inventors have found that adding TGase after the bacterial culture (ie after the fermentation has started) can significantly decrease fermentation time of TGase treated milk.

Also disclosed is an acidified milk product which is obtainable by a method of the invention, e.g. an acidified product which is packaged. e.g. in a sealed container having a volume in the range of 25 to 1500 ml. The acidified milk product produced by any method of the present Invention may be drinkable, i.e. to be consumed as a beverage, or it may be spoonable or firm (solid) form, so-called set-type.

In a last aspect, the present invention relates to the use of a protein hydrolyzate as defined herein, and/or the protease as defined herein for decreasing the fermentation time of a milk substrate treated with transglutaminase.

### DETAILED DISCLOSURE

The present invention relates to a method for producing an acidified milk product, said method comprising:
a) providing a milk substrate;
b) treating the milk substrate with an enzyme having transglutaminase activity; and
c) fermenting the milk substrate with a microorganism;
wherein the enzyme having transglutaminase activity is added at least 30 minutes after the fermentation has started.

The present invention also relates to a method for producing an acidified milk product, said method comprising:
a) providing a milk substrate;
b) treating the milk substrate with an enzyme having transglutaminase activity; and
c) fermenting the milk substrate with a microorganism; wherein the enzyme having transglutaminase activity is added at least 30 minutes after the fermentation has started; and
wherein a protein hydrolyzate and/or a protease is added to the milk substrate.

The protein hydrolyzate and/or the protease may be added to the milk substrate before or during step c), together or at different points in time. It should be understood that in case a protease is added a protein which can be hydrolyzed by the protease may also be added to the milk substrate. Alternatively, the protein may be hydrolyzed before addition to the milk substrate.

In a further aspect, the present invention relates to a method for producing an acidified milk product, said method comprising:
a) providing a milk substrate comprising a protein hydrolyzate;
b) treating the milk substrate with an enzyme having transglutaminase activity; and
c) fermenting the milk substrate with a microorganism; wherein the enzyme having transglutaminase activity is added at least 30 minutes after the fermentation has started; and
wherein optionally a protease is added to the milk substrate.

In interesting embodiments, the protein hydrolyzate may be selected from the group consisting of: A milk protein hydrolyzate; A peptone (such as potato peptone); A yeast extract; and Hydrolyzed yeast extract. Examples are: casein hydrolyzate, NZ Case and Maxicurd. It is presently preferred that the hydrolyzate is selected from the group consisting of milk protein hydrolyzate, casein hydrolyzate, whey protein hydrolyzate, said hydrolyzate being e.g. an acid hydrolyzate or an enzymatic hydrolyzate. The protein hydrolyzate may be added in a concentration (w/w) in the range of 0.01% to 3.00%, such as in the ranges: 0.05% to 1.00%, 0.08% to 0.50%, or 0.09% to 0.30%.

A presently interesting embodiment is a method for producing an acidified milk product, said method comprising:
a) providing a milk substrate;
b) treating the milk substrate with an enzyme having transglutaminase activity;
c) treating the milk substrate with a protease; and
d) fermenting the milk substrate with a microorganism; wherein the enzyme having transglutaminase activity is added at least 30 minutes after the fermentation has started. Step c) may be performed before, during or after step b).

In an interesting embodiment of a method of the invention, the protease is selected from the group consisting of: a serine protease, a Bacillus protease, a Cysteine protease, an Aspartic protease, a metalloprotease, a protease classified in EC 3.4.-.-, a protease classified in EC 3.4,21.- (e.g. in EC 3.4.21.62), a protease classified in EC 3.4.22.-, a protease classified in EC 3.4.23.-, a protease classified in EC 3.4.24.- (e.g. EC 3.4.24.28), Neutrase ®, Alcalase ®, subtilisin A (Type VIII), Colorase N, Optimase or Protease N "Amano".

In an interesting embodiment of a method of the invention, the enzyme having transglutaminase activity is added during step c), such as at least 40 minutes, 50 minutes, 60 minutes, 70 minutes, 80 minutes, and even at least 120 minutes after start of fermentation.

In another interesting embodiment of a method of the invention, the enzyme having transglutaminase activity is added during step c), e.g. no earlier than at pH 6.4 (such as no earlier than at pH 6.3, no earlier than at pH 6.1, no earlier than at pH 5.9, or no earlier than at pH 5.7).

Other embodiments of any method of the present invention are as follows:
- The method wherein the protease is added in a concentration (w/w) in the range of 0.00001% to 5%, such as in the ranges: 0.0001% to 1%, 0.0001% to 0.5%, or 0.001% to 0.1%.
- The method wherein the fermentation time is reduced compared to a fermentation wherein no protease is added.
- The method wherein the protease treatment is performed during or after the transglutaminase treatment.
- The method wherein the fermentation time is reduced compared to a fermentation wherein no protein hydrolyzate is added.
- The method wherein the milk substrate is subjected to pasteurization before fermentation and the enzyme treatment is performed before pasteurization.
- The method wherein the milk substrate is subjected to heat treatment prior to treatment with the enzyme having transglutaminase activity. Preferably, such heat treatment results in more than 50% denaturation of the whey protein in the milk substrate.
- The method wherein glutathione is added to the milk substrate prior to treatment with the enzyme having transglutaminase activity.
- The method wherein the microorganism is a lactic acid bacterium.
- The method wherein the fermented milk substrate (obtained in step c) is mixed with a syrup and the mixture is subjected to homogenization.
- The method wherein the acidified milk product is selected from the group consisting of: a fermented milk drink, a fermented set-type product (e.g. a set-type yoghurt), and a fermented spoonable product (e.g. a spoonable yoghurt).
- The method wherein the fermented milk substrate (obtained in step c) is diluted at least 1.5 times (with e.g. water, milk or milk substrate) to obtain the acidified milk drink.
- The method wherein the acidified milk drink is to be consumed as a beverage, ie it intended way of consumption.
- The method wherein the acidified milk drink has a milk solid non-fat content of less than 8%.
- The method wherein the acidified milk drink has a fat content of less than 2%.
- The method of the preceding claim, wherein the acidified milk drink has a fat content of less than 0.5%.
- The method wherein the enzyme having transglutaminase activity is recombinantly produced.
- The method wherein the enzyme having transglutaminase activity is obtained from a bacterium belonging to the genus *Streptomyces.*

Also disclosed herein is an acidified milk product obtainable by a method of the invention. In an interesting embodiment, the acidified product is packaged. e.g. in a sealed container having a volume in the range of 25 to 1500 ml.

In a last aspect, the present invention relates to the use of a protein hydrolyzate as defined herein and/or the use of a protease as defined herein for decreasing the fermentation time of a milk substrate treated with transglutaminase.

### Acidified milk products

The term "acidified milk products" refers to any milk-based product which has been acidified, and includes fermented milk products, and acidified milk drinks. The term "fermented milk product" includes yoghurt. The term "yoghurt" typically covers a milk product produced by fermentation by a starter culture comprising the combination of a Lactobacillus species (e.g. L. bulgaricus) and Streptococcus thermophilus or any other appropriate combination of microorganisms.

The term "spoonable" should be understood as to be consumed using a spoon. The term "spoonable fermented milk product" includes "stirred yoghurt". The term "stirred yoghurt" specifically refers to a yoghurt product which sustains a mechanical treatment after fermentation, resulting in a softening and liquefaction of the coagulum formed under the fermentation stage. The mechanical treatment is typically but not exclusively obtained by stirring, pumping, filtrating or homogenizing the yoghurt gel, or by mixing it with other ingredients. Stirred yoghurts typically but not exclusively have a milk solid non-fat content of 9 to 15%. The term "set-type fermented milk product" includes a product based on milk which has been inoculated with a starter culture, e.g. a yoghurt starter culture, and packaged next to the inoculating step and then fermented in the package. The term "drinkable fermented milk product" , "acidified milk drink", "fermented milk drink" and the like includes beverages such as "drinking yoghurt" and similar. The term "drinking yoghurt" typically covers a milk product produced by fermentation by the combination of a Lactobacillus species (e.g. L. bulgaricus) and Streptococcus thermophilus. "Drinking yoghurt" is typically consumed by drinking the yoghurt, e.g. directly from the packaging or from a glas/cup or the like. Drinking yoghurt typically have a milk solid non-fat content of 8% or more. Furthermore, the live culture count for drinking yoghurt drinks is typically at least 10E6 cell forming units (CFU) pr ml.

"Acidified milk drinks" according to the present invention include any drinkable product based on acidified milk substrates, thus including fermented milk drinks and liquid yoghurt drinks. In the methods of the present invention, acidification is performed as a fermentation with a microorganism. Acidified milk drinks according to the invention are drinkable in the sense that they are in liquid form and consumed as beverages, i.e. they are suitable for drinking instead of being eaten with a spoon. "In liquid form" means that the products are in the fluid state of matter thus exhibiting a characteristic readiness to flow. Thus, the shape of a liquid is usually determined by the container it fills, in contrary to e.g. a gel-like substance, which is soft, but not free flowing, such as e.g. yoghurt or pudding. Acidified milk drinks according to the invention may have a viscosity allowing the consumer to drink the products using a straw if desired. In a preferred aspect, acidified milk drinks according to the invention have a viscosity measured as discharge time from a 10 mi pipette which is substantially the same as the discharge time of an acidified milk drink produced without transglutaminase. In this context, a discharge time which is substantially the same means that it is less than 20% increased, preferably less than 15% increased and more preferably less than 10% increased.

An acidified milk drink according to the present invention may have a pH of less than 4.6, preferably less than 4.4, more preferably less than 4.2 and even more preferably about pH 4 or less. In one aspect, the acidified milk drink has a pH of less than 3.8, such as less than 3.6. An acidified milk drink according to the invention may have a fat content of 0 to 2%, preferably below 1.5%, below 1% or below 0.5%, more preferably of about 0.1% or less. The acidified milk drink may have a milk solid non-fat content of less than 20%, preferably less than 8.5%, less than 8%, less than 7.5%, less than 7%, less than 6.5% or less than 6%, and more preferably of about 5%. An acidified milk drink according to the invention may have a protein content of between 0.5 and 4%. In one preferred aspect, the acidified milk drink has a protein content of below 1%. In another preferred aspect, the acidified milk drink has a protein content of between 2% and 3%.

An acidified milk drink according to the invention may have a shelf life of more than 7 days, preferably more than 14 days, more preferably more than 28 days, such as more than 3 months. By the term "shelf-life" as used herein should be understood the time-period from the finalisation of a product and until this product, when stored properly and under the conditions recommended by the manufacturer, becomes unacceptable to the consumer. A TGase treated acidified milk drink according to the present invention has an increased stability. The stability may be determined after having stored the acidified milk drink for an appropriate number of days by measuring the height of the whey collecting on the surface because of syneresis. It may also be determined after accelerated syneresis, such as by centrifugation.

"Milk substrate", in the context of the present invention, may be any raw and/or processed milk material that can be subjected to acidification according to the method of the invention. Thus, useful milk substrates include, but are not limited to, solutions/suspensions of any milk or milk like products comprising protein, such as whole or low fat milk, skim milk, buttermilk, reconstituted milk powder, condensed milk, dried milk, whey, whey permeate, lactose, mother liquid from crystallization of lactose, whey protein concentrate, or cream. Obviously, the milk substrate may be milk. The term "milk" is to be understood as the lacteal secretion obtained by milking any mammal, such as cows, sheep, goats, buffaloes or camels. In a preferred embodiment, the milk is cow's milk.

In the context of the present invention, percentages defining the content of the milk substrate or the content of the acidified milk drink are mass percentages, i.e. the mass of a substance (e.g. protein or lactose) as a percentage of the mass of the entire solution (milk substrate or acidified milk drink). Thus, in a milk substrate having a protein content of more than 5%, the mass of the proteins constitutes more than 5% of the mass of the milk substrate. Preferably, at least part of the protein in the milk substrate is proteins naturally occurring in milk, such as casein or whey protein. However, part of the protein may be proteins which are not naturally occurring in milk.

The term "hydrolyzate" refers to any substance produced by hydrolysis. The term is not intended to be limited to substance produced by any specific method of hydrolysis. The term is intended to include "hydrolyzates" produced by enzymatic as well as non-enzymatic reactions. For example, any of the known hydrolytic enzymes (e.g., proteases, serine proteases, metalloproteases, hydrolases, etc.) are capable of producing hydrolyzates within the meaning of how the term is used in the present context. Similarly, non-enzymatic methods of hydrolysis (e.g., acid/base hydrolysis, etc.) also produce hydrolyzates within the meaning of how the term is used in the present application. The term "protein hydrolyzate" refers to a hydrolyzate produced by hydrolysis of a protein of any type or class. Any known protein may be hydrolyzed to produce a protein hydrolyzate within the meaning of the term. A "protein hydrolyzate" may be produced by enzymatic as well as non- enzymatic methods and may include protein fragments (e.g., polypeptides) that range in size from two to 100 or more amino acids. Further, as used herein, a "protein hydrolyzate" is not limited to a single product compound, but may include a heterogenous distribution or mixture of hydrolysis products (e.g., protein fragments). It may also include a homogenous compound or purified fraction of hydrolysis products. The term "protein" refers to any composition comprised of amino acids and recognized as a protein by those of skill in the art. The terms "protein," "peptide" and "polypeptide" are used interchangeably herein. The term "milk protein hydrolyzate" refers to a hydrolyzate produced by hydrolysis of a milk protein of any type or class, e.g. a casein or a whey protein.

Proteases useable in the present invention is in particular proteases from the IUBMB Enzyme Nomenclature class EC 3.4.-.-, especially from subclasses EC 3.4.21.-, EC 3.4.22.-, EC 3.4.23.- and EC 3.4.24.-. The classes comprises serine proteases, Bacillus proteases, Cysteine proteases, Aspartic proteases, metalloproteases, proteases classified in EC 3.4.21.62, EC 3.4.22.2, EC 3.4.23.4, EC 3.4.24.28, Neutrase ®, Alcalase ®, subtilisin A (Type VIII), papain, chymosin, Colorase N, Optimase or Protease N "Amano". The protease may be used in purified form, e.g. isolated from a microorganism, such as a protease originating from a lactic acid bacterium, or it may be produced in situ by a microorganism, such as the lactic acid bacterium used for the fermentation.

Prior to fermentation, the milk substrate may be homogenized and pasteurized according to methods known in the art. "Homogenizing" as used herein means intensive mixing to obtain a soluble suspension or emulsion. If homogenization is performed prior to fermentation, it may be performed so as to break up the milk fat into smaller sizes so that it no longer separates from the milk. This may be accomplished by forcing the milk at high pressure through small orifices. "Pasteurizing" as used herein means treatment of the milk substrate to reduce or eliminate the presence of live organisms, such as microorganisms. Preferably, pasteurization is attained by maintaining a specified temperature for a specified period of time. The specified temperature is usually attained by heating. The temperature and duration may be selected in order to kill or inactivate certain bacteria, such as harmful bacteria. A rapid cooling step may follow.

In the methods of the present invention, the milk substrate is acidified by fermentation with a microorganism. Optionally, such acidification by fermentation is combined with chemical acidification of the milk substrate. "Fermentation" in the methods of the present invention means the conversion of carbohydrates into alcohols or acids through the action of a microorganism. Preferably, fermentation in the methods of the invention comprises conversion of lactose to lactic acid.

In the context of the present invention, "microorganism" may include any bacterium or fungus being able to ferment the milk substrate. The microorganisms used for most fermented milk products are selected from the group of bacteria generally referred to as lactic acid bacteria. As used herein, the term "lactic acid bacterium" designates a gram-positive, mlcroaerophilic or anaerobic bacterium, which ferments sugars with the production of acids including lactic acid as the predominantly produced acid, acetic acid and propionic acid. The industrially most useful lactic acid bacteria are found within the order "Lactobacillales" which includes *Lactococcus* spp., *Streptococcus* spp., *Lactobacillus* spp., *Leuconostoc* spp., *Pseudoleuconosfoc* spp., *Pediccoccus* spp., *Brevibacterium* spp., *Enterococcus* spp. and *Propionibacterium* spp. Additionally, lactic acid producing bacteria belonging to the group of the strict anaerobic bacteria, bifidobacteria, i.e. *Bifidobacterium* spp., are generally included in the group of lactic acid bacteria. These are frequently used as food cultures alone or in combination with other lactic acid bacteria. Lactic acid bacteria are normally supplied to the dairy industry either as frozen or freeze-dried cultures for bulk starter propagation or as so-called "Direct Vat Set" (DVS) cultures, intended for direct inoculation into a fermentation vessel or vat for the production of a dairy product, such as an acidified milk drink. Such cultures are in general referred to as "starter cultures" or "starters".

Commonly used starter culture strains of lactic acid bacteria are generally divided into mesophilic organisms having optimum growth temperatures at about 30°C and thermophilic organisms having optimum growth temperatures in the range of about 40 to about 45°C.

Typical organisms belonging to the mesophilic group include *Lactococcus lactis, Lactococcus lactis* subsp. *cremoris, Leuconostoc mesenteroides* subsp. *cremoris, Pseudoleuconostoc mesenteroides* subsp, *cremoris*, *Pediococcus pentosaceus, Lactococcus lactis* subsp. *lactis biovar. diacetylactis, Lactobacillus casei* subsp. *casei* and *Lactobacillus paracasei* subsp. *paracasei.* Thermophilic lactic acid bacterial species include as examples *Streptococcus thermophilus, Enterococcus faecium, Lactobacillus delbrueckii* subsp. *lactis, Lactobacillus helveticus, Lactobacillus delbrueckii* subsp. *bulgaricus* and *Lactobacillus acidophilus.*

Also the strict anaerobic bacteria belonging to the genus *Bifidobacterium* including *Bifidobacterium bifidum* and *Bifidobacterium longum* are commonly used as dairy starter cultures and are generally included in the group of lactic acid bacteria. Additionally, species of *Propionibacteria* are used as dairy starter cultures, in particular In the manufacture of cheese. Additionally, organisms belonging to the *Brevibacterium* genus are commonly used as food starter cultures.

Another group of microbial starter cultures are fungal cultures, including yeast cultures and cultures of filamentous fungi, which are particularly used in the manufacture of certain types of cheese and beverage. Examples of fungi include *Penicillium roqueforti, Penicillium candidum, Geotrichum candidum, Torula kefir, Saccharomyces kefir and Saccharomyces cerevisiae.*

In a preferred embodiment of the present invention, the microorganism used for fermentation of the milk substrate is *Lactobacillus casei* or a mixture of *Streptococcus thermophilus* and *Lactobacillus species, e.g. L. delbrueckii* subsp. *bulgaricus.*

Fermentation processes to be used in production of acidified milk drinks are well known and the person of skill in the art will know how to select suitable process conditions, such as temperature, oxygen, amount and characteristics of microorganism(s) and process time. Obviously, fermentation conditions are selected so as to support the achievement of the present invention, i.e. to obtain a fermented milk product suitable in the production of an acidified milk drink. Likewise, the skilled person will know if and when additives such as, e.g., carbohydrates, flavours, minerals, enzymes (e.g. rennet, lactase and/or phospholipase) are to be used in production of acidified milk drinks according to the invention.

Optionally, the fermented milk substrate may be diluted to obtain the acidified milk drink. In one embodiment, the fermented milk substrate is diluted at least 1.5 times, preferably at least 2 times, at least 2.5 times or at least 3 times. It may be diluted with water or an aqueous solution of any kind. "Diluted at least 1.5 times" in the context of the present invention means that the fermented milk substrate is diluted so that its volume is increased by at least 50%.

In one embodiment, a syrup is added to the fermented milk substrate. "Syrup" in the context of the present invention is any additional additive ingredient giving flavour and/or sweetness to the final product, i.e. the acidified milk drink. It may be a solution comprising, e.g., sugar, sucrose, glucose, liquid sugar of fructose, aspartame, sugar alcohol, fruit concentrate, orange juice, strawberry juice and/or lemon juice. The mixture of the fermented milk substrate and the syrup may be homogenized using any method known in the art. The homogenization may be performed so as to obtain a liquid homogenous solution which is smooth and stable. Homogenization of the mixture of the acidified milk substrate and the syrup may be performed by any method known in the art, such as by forcing the milk at high pressure through small orifices.

In another embodiment of the Invention, water is added to the fermented milk substrate, and the mixture of fermented milk substrate and water is homogenized.

The methods of the present invention comprise treatment of the milk substrate with an enzyme having transglutaminase activity, at least 30 minutes after fermentation has started. Alternatively, the enzyme treatment may be performed after fermentation. If the acidified milk substrate is mixed and optionally homogenized with the syrup, the enzyme treatment may be performed before or after this. The enzyme may be added at the same time or after the syrup, but before homogenization, or it may be added after the acidified milk substrate and the syrup have been mixed and homogenized.

In another preferred embodiment, the milk substrate is subjected to heat treatment, such as pasteurization, prior to treatment with transglutaminase. The heat treatment may be performed so that more than 50%, preferably more than 60%, more than 70% or more than 80%, of the whey protein in the milk substrate is denatured. In the context of the present invention, whey protein is denatured when it sediments at pH 4.5. In a more preferred embodiment, the milk substrate is subjected to heat treatment followed by homogenisation prior to treatment with transglutaminase. Optionally, the fermented milk substrate may be subjected to heat treatment, such as pasteurization, to inactivate the microorganism. Another heat treatment may be performed after the enzyme treatment so as to inactivate the enzyme.

The enzyme having transglutaminase activity is added in a suitable amount to achieve the desired degree of protein modification under the chosen reaction conditions. The enzyme may be added at a concentration of between 0.0001 and 1 g/L milk substrate, preferably between 0.001 and 0.1 g/L milk substrate. Dosing in units, the enzyme may be added at a concentration of between 0.5 TGHU (TransGlutaminase Hydroxamate Units) and 20 TGHU TGase/g protein in the milk substrate, preferably between 2 and 10 TGHU TGase/g protein in the milk substrate. In another preferred embodiment, yeast extract or a reducing agent such as glutathione is added to the milk substrate prior to treatment with transglutaminase.

The enzymatic treatment in the methods of the invention may be conducted by adding the enzyme to the milk substrate and allowing the enzyme reaction to take place at an appropriate holding-time at an appropriate temperature. The enzyme treatment may be carried out at conditions chosen to suit the selected protein modifying enzyme according to principles well known in the art. The treatment may also be conducted by contacting the milk substrate with an enzyme that has been immobilised.

The enzyme treatment may be conducted at any suitable pH, such as, e.g., in the range of pH 2-10, such as, at a pH of 4-9 or 5-7. It may be preferred to let the enzyme act at the natural pH of the milk substrate, or, if acidification is obtained because of fermentation, the enzyme may act at the natural pH of the milk substrate during the fermentation process, i.e. the pH will gradually decrease from the natural pH of the unfermented milk substrate to the pH of the fermented milk substrate.

The enzyme treatment may be conducted at any appropriate temperature, e.g. in the range 1-80°C, such as 2-70°C. In one embodiment of the present invention, the enzyme treatment may preferably be conducted at a temperature in the range 40-50°C. In another embodiment, the enzyme treatment may preferably be conducted at a temperature of below 10°C.

Optionally, after the enzyme has been allowed to act on the milk substrate, the enzyme protein may be removed, reduced, and/or inactivated by any method known in the art, such as by heat treatment and/or reduction of pH.

Optionally, other ingredients may be added to the acidified milk drink, such as colour; stabilizers, e.g. pectin, starch, modified starch, CMC, etc.; or polyunsaturated fatty acids, e.g. omega-3 fatty acids. Such ingredients may be added at any point during the production process, i.e. before or after fermentation, before or after enzyme treatment, and before or after the optional addition of syrup. In a preferred embodiment, the transglutaminase treatment is combined with the addition of CMC.

### Enzyme having transglutaminase activity

In the methods of the present invention, an enzyme having transglutaminase activity is used in the production of acidified milk drinks, thus decreasing the syneresis upon storage.

In the context of the present invention, an enzyme having transglutaminase activity may be an enzyme which catalyzes the acyl transfer between the gamma-carboxylamide group of peptide-bound glutamine (acyl donor) and primary amines (acyl acceptor), e.g. peptide-bound lysine. Free acid amides and amino acids also react. Proteins and peptides may thus be cross linked in this way. Transglutaminase may also, e.g. if amines are absent, catalyze the deamination of glutamine residues in proteins with H₂O as the acyl acceptor. A transglutaminase may also be referred to as, e.g., protein glutamine-gamma-glutamyl transferase, Factor XIIIa, fibrinoligase, fibrin stabilizing factor, glutaminylpeptide gamma-glutamyltransferase, polyamine transglutaminase, tissue transglutaminase, or *R*-glutaminylpeptide:amine gamma-glutamyl transferase. The group of transglutaminases comprises but is not limited to the enzymes assigned to subclass EC 2.3.2.13. In the context of the present invention, transglutaminase may also be referred to as TGase.

A transglutaminase to be used according to the invention is preferably purified. The term "purified" as used herein covers enzyme protein preparations where the preparation has been enriched for the enzyme protein in question. Such enrichment could for instance be: the removal of the cells of the organism from which an enzyme protein was produced, the removal of non-protein material by a protein specific precipitation or the use of a chromatographic procedure where the enzyme protein in question is selectively adsorbed and eluted from a chromatographic matrix. The transglutaminase may have been purified to an extent so that only minor amounts of other proteins are present. The expression "other proteins" relate in particular to other enzymes. A transglutaminase to be used in the method of the invention may be "substantially pure", i.e. substantially free from other components from the organism in which it was produced, which may either be a naturally occurring microorganism or a genetically modified host microorganism for recombinant production of the transglutaminase. However, for the uses according to the invention, the transglutaminase need not be that pure. It may, e.g., include other enzymes. In a preferred aspect, the transglutaminase to be used in the method of the invention has been purified to contain at least 20%, preferably at least 30%, at least 40% or at least 50%, (w/w) of transglutaminase out of total protein. The amount of transglutaminase may be calculated from an activity measurement of the preparation divided by the specific activity of the transglutaminase (activity/mg EP), or it may be quantified by SDS-PAGE or any other method known in the art. The amount of total protein may, e.g., be measured by amino acid analysis.

In one embodiment of the methods of the invention, the enzyme having transglutaminase activity is recombinantly produced. In other embodiments of the present invention, the enzyme having transglutaminase activity may be of animal, of plant or of microbial origin. Preferred enzymes are obtained from microbial sources, in particular from a filamentous fungus or yeast, or from a bacterium. For purposes of the present invention, the term "obtained from" as used herein in connection with a given source shall mean that the enzyme originates from the source. The enzyme may be produced from the source or from a strain in which the nucleotide sequence encoding the enzyme has been inserted, i.e. a recombinant strain. In a preferred embodiment, the polypeptide obtained from a given source is secreted extracellularly.

The enzyme may, e.g., be obtained from a strain of *Agaricus,* e.g. *A. bisporus; Ascovaginospora; Aspergillus,* e.g. *A. niger, A. awamori, A. foetidus, A. japonicus, A. oryzae; Chaetomium; Chaetotomastia; Dictyostelium,* e.g. *D. discoideum; Mucor,* e.g. *M. javanicus, M, mucedo, M. subtilissimus; Neurospora,* e.g. *N. crassa; Rhizomucor,* e.g. *R. pusillus; Rhizopus,* e.g. *R. arrhizus, R. japonicus, R. stolonifer; Sclerotinia,* e.g. *S. libertiana; Trichophyton,* e.g. *T. rubrum; Whetzelinia,* e.g. *W. sclerotiorum; Bacillus,* e.g. *B. megaterium, B. subtilis, B. pumilus, B. stearothermophilus, B. thuringiensis; Chryseobacterium; Citrobacter,* e.g. C. *freundli; Enterobacter,* e.g. *E. aerogenes, E. cloacae Edwardsiella*, *E. tarda; Erwinia,* e.g. *E. herbicola; Escherichia,* e.g. *E. coll; Klebsiella,* e.g. *K. pneumoniae; Miriococcum; Myrothesium; Mucor; Neurospora,* e.g. *N. crassa; Phytophthora,* e.g. *P. cactorum; Proteus,* e.g. *P. vulgaris; Providencia,* e.g. *P. stuartii; Pycnoporus,* e.g. *Pycnoporus cinnabarinus, Pycnoporus sanguineus; Salmonella,* e.g. *S. typhimurium; Serratia,* e.g. *S. liquefasciens, S. marcescens; Shigella,* e.g. *S. flexneri; Streptomyces,* e.g. *S. antibioticus, S. castaneoglobisporus, S. lydicus, S. mobaraensis, S. violeceoruber; Streptoverticilium,* e.g. *S. mobaraensis; Trametes; Trichoderma,* e.g. *T. reesei, T. viride; Yersinia,* e.g. *Y. enterocolitica.*

In a preferred embodiment, the enzyme is a transglutaminase obtained from a bacterium, e.g. an Actinobacterium from the class Actinobacteria, such as from the subclass Actinobacteridae, such as from the order Actinomycetales, such as from the suborder Streptomycineae, such as from the family Streptomycetaceae, such as from a strain of *Streptomyces,* such as *S*. *lydicus or S. mobaraensis.* In another embodiment, the enzyme is a transglutaminase obtained from a fungus, e.g. from the class *Oomycetes,* such as from the order *Peronosporales,* such as from the family *Pythiaceae,* such as from the genera *Pythium* or *Phytophthora,* such as from a strain of *Phytophthora cactorum.*

According to the present invention, transglutaminase activity may be determined by any method known in the art, such as by incubating the enzyme with gamma-carboxamid group of protein- or peptide-bound glutamine and an amine group, e.g. protein- or peptide-bound lysine, in a buffer at various pH and temperatures, e.g. 50 mM MES at pH 6.5 at 37°C for 30 minutes. The detection of enzyme activity can be followed by the release of ammonia (e.g. kit obtained from Roche NH3-11877984) or using hydroxylamine as amine group donor (the amount of Glutamic acid gamma-hydroxamate formed in the reaction is detected as a red complex with ferric ions under acid conditions measured at 510 nm) or by determination of the epsilon-(gamma-glutamyl)lysin by amino acid analysis.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising", "having", "including" and "containing" are to be construed as open-ended terms (i.e., meaning "Including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

### EXAMPLES

### EXAMPLE 1 Comparison of three different TGases

Mink: Arla express skimmed milk obtained from supermarket (Bagsvaerd, Denmark) was used. The milk was incubated at 95°C for 5 min before use.

Sugar solutions: 18% sucrose, 20 mM Lactic acid, pH 4.0.

Enzyme: Purified *Streptomyces Mobaraensis* (SM) TGase 25 mg/ml, *Streptomyces Lydicus* (SL) TGase 28 mg/ml and *Phytophthora cactorum* (PC) 6 mg/ml was diluted to give the final concentrations indicated in the Table.

### Procedure

375 ul milk was transferred to 2 ml eppendorf tube. 30 ul Enzyme or water (control) was added, hereafter incubation was performed for 120 min at 40°C. The solution was incubated at 85°C for 30 min in a water bath and hereafter incubated at 43°C (water bath) for 10 min with mixing (1000 rpm) in an Eppendorf Thermomixer. 45 ul 4 U/l YF-3331 (mixed strain culture containing *Streptococcus thermophilus* and *Lactobacillus delbrueckii* subsp. *bulgaricus* from Chr. Hansen A/S, Denmark) solubilised in milk was added and incubation was performed for 16 hours at 43°C.

Hereafter the samples were incubated at 0-5°C ice/water bath for 20 min. 900 ul sugar solution (0-5°C, ice bath) was added and homogenized with ultrasound (6 x 5 sec, 50% amplitude, with 9 sec pause) on ice bath. The samples were placed at 5°C for 14 days and syneresis was measured. The syneresis height was measured and the relative syneresis of total milk drink height was calculated. Double determinations are shown in the table below. MD is the mean deviation. Enzyme concentration is shown per liter acidified milk drink.

| | Syneresis height % | MD |
|---|---|---|
| SL, 100 mg/l AMD | 34.0 | 2.0 |
| SL, 20 mg/l AMD | 28.0 | 0 |
| SL, 4 mg/l AMD | 44.1 | 0.7 |
| SL, 0.9 mg/l AMD | 58.7 | 0.8 |
| SM, 100 mg/l AMD | 15.6 | 0.9 |
| SM, 20 mg/l AMD | 16.0 | 1.8 |
| SM, 4 mg/l AMD | 15.7 | 4.3 |
| SM, 0.9 mg/l AMD | 48.9 | 0.8 |
| PC, 100 mg/l AMD | 31.7 | 4.5 |
| PC, 20 mg/l AMD | 52.1 | 2.9 |
| PC, 4 mg/l AMD | 59.6 | 2.4 |
| Control | 62.6 | 0.7 |

### Example 2

Skimmed milk (Aria Express, Aria Foods, DK) was added the following ingredients in the concentrations given in Table 1:
- NZ Case (Sigma C1026- 054K0045) (Casein hydrolyzate)
- Potato peptones (Fluka 83059 (Peptones from potato)1350124 41208166)
- Yeast extract (Oxoid LP0021)
- Maxicurd (MC 3608, DSM) (Protein hydrolyzate).

The milk mix was then pasteurized at 90C for 20 min and cooled to 43C and 30 U/g (Units per gram milk protein) TGase from *S*. *mobaraensis* (Novozymes, Bagsvaerd, Denmark) was added to one of each of the blends, whereas another of each of the blends was not added TGase (and served as control). All milks were added 0.02% of a yoghurt culture (YF-3331, Chr. Hansen). pH during the fermentation at 43C was followed using a Cinac system, and fermentation time to reach pH 4.2 was noted.

**Table 1**

| **Treatment** | **Fermentation time to pH 4.2 (min)** | **Decrease in fermentation time (%)** |
|---|---|---|
| No TGase | 368 | NA |
| TGase | 564 | NA |
| 0.25% NZ case | 372 | 1 |
| 0.25% NZ case + TGase | 376 | -33 |
| 0.1% Potato peptone | 324 | -12 |
| 0.1% Potato peptone + TGase | 368 | -35 |
| 4.1% Yeast extract | 332 | -10 |
| 0.1% Yeast extract + TGase | 392 | -30 |
| 0.25% Maxicurd | 332 | -10 |
| 0.25% Maxicurd + TGase | 356 | -37 |
| 0.1% Maxicurd | 328 | -11 |
| 0.1% Maxicurd + TGase | 396 | -30 |

As shown in Table 1, several of the ingredients were able to reduce fermentation time significantly. But surprisingly, whereas fermentation time for the non-treated (witout TGase) sample was reduced slightly by on average 8% by the ingredients, the fermentation time of the TGase treated sample was decreased by on average 33%.

### Example 3

Skimmed milk (Aria Express, Aria Foods, Denmark) was pasteurized at 90C for 20 min, cooled to 43C and varying dosages of TGase from *S*. *mobaraensis* (Novozymes, Bagsvaerd, Denmark) (according to Table 2) were added to the skim milk either immediately together with the yoghurt culture (0.02% YF-3331, Chr. Hansen) or at a certain time (according to Table 2) after addition of the yoghurt culture. The milk was then incubated at 43C and pH during the fermentation was followed using a Cinac system, and fermentation time to pH 4.2 was noted. Samples 1-3 served as control samples.

| **Sample** | **TGase (U/g)** | **TGase (mg)** | **Delay time before adding TGase (min)** | **Time to pH 4.2 (min)** |
|---|---|---|---|---|
| 1 | 0,00 | 0 | 0 | 376 |
| 2 | 10,00 | 150 | 0 | 540 |
| 3 | 30,00 | 500 | 0 | 2000 |
| 4 | 10,00 | 150 | **60** | 460 |
| 5 | 30,00 | 500 | **60** | 532 |
| 6 | 10,00 | 150 | **75** | 404 |
| 7 | 30,00 | 500 | **75** | 408 |

As shown in Table 2 the increase in fermentation time caused by TGase is clearly dosages dependent, but surprisingly it significantly decreased the delay In fermentation time when TGase was added after the yoghurt culture. As shown the relative improvement (decrease) in fermentation time was higher, the later TGase was added and the Improvement was largest at the highest dosages of TGase.

### EXAMPLE 4 The effect of TGase + protease on fermentation time and syneresis.

Milk solution: Arla express milk obtained from supermarket (Bagsvaerd, Denmark)
Sugar solution: 18% sucrose (w/w) in 20 mM lactic acid buffer, pH 4.0. Before use, this solution have been preincubated at 90°C for 5 min with stirring and then cooled down to 5°C.
TGase solution: Purified TGase 2 mg/ml in 10 mM sodium phosphate buffer, 0.01 % Triton X-100, pH 6.5
Neutrase solution: Neutrase 0.8L product from Novozymes diluted 1600, 3200 and 6400 times, respectively, with 10 mM sodium phosphate buffer, 0.01 % Triton X-100
Enzyme dilution buffer: 10 mM sodium phosphate buffer, 0.01 % Triton X-100, pH 6.5
Procedure: 375 µl milk solution was transferred to 2 ml eppendorf tube. 15 µl TGase solution or Enzyme dilution buffer (control) was incubated for 60 min at 40°C. Then 15µl Neutrase solution or Enzyme dilution buffer (control) was incubated for an additional 60 min at 40°C.

The solution was incubated at 85°C for 30 min in a water bath and hereafter incubated at 43°C (water bath) for 10 min with mixing (1000 rpm) in an Eppendorf Thermomixer. 45 µl 4 U/l YF-3331 (mixed strain culture containing *Streptococcus thermophilus* and *Lactobacillus delbrueckii* subsp. *bulgaricus* from Chr. Hansen A/S, Denmark) solubilized in milk solution was added and incubation was performed for 21 hours at 43°C. The pH was measured after 1 hr, 2 hr, 3 hr, 4hr, 5 hr and 21 hr.

After 21 hr fermentation the samples were incubated at 0-5°C ice/water bath for 20 min. 900 µl sugar solution (0-5°C, ice bath) was added and homogenized with ultrasound (4 x 5 sec with 9 sec pause) on ice bath.

The samples were placed at 5°C for 1 day and syneresis was measured. The syneresis height was measured and the relative syneresis of total milk drink height was calculated.

### pH measurement

Double determinations are shown in the table below. MD is the mean deviation. The first column is the time of pH measurement.
Treatment A: TGase without protease (comparative sample)
Treatment B: TGase with Neutrase diluted 1600 times
Treatment C: TGase with Neutrase diluted 3200 times
Treatment D: TGase with Neutrase diluted 6400 times

| | Treatment A | MD | Treatment B | MD | Treatment C | MD | Treatment D | MD |
|---|---|---|---|---|---|---|---|---|
| hr | pH | (+/-) | pH | (+/-) | pH | (+/-) | pH | (+/-) |
| 0 | 6.73 | 0.005 | 6.71 | 0.01 | 6.71 | 0 | 6.71 | 0.01 |
| 1 | 6.55 | 0 | 6.54 | 0.005 | 6.55 | 0 | 6.56 | 0.01 |
| 2 | 6.08 | 0.055 | 5.82 | 0.055 | 5.76 | 0.015 | 5.77 | 0.005 |
| 3 | 5.46 | 0.06 | 5.19 | 0.02 | 5.35 | 0.01 | 5.27 | 0.045 |
| 4 | 5.18 | 0.095 | 4.80 | 0.04 | 4.94 | 0.03 | 4.91 | 0.03 |
| 21 | 4.10 | 0.06 | 3.80 | 0.03 | 3.92 | 0.025 | 3.88 | 0.02 |

Treatment E: Control without any enzyme added (comparative sample)
Treatment F: Neutrase diluted 1600 times (no TGase added) (comparative sample)
Treatment G: Neutrase diluted 3200 times (no TGase added) (comparative sample)
Treatment H: Neutrase diluted 6400 times (no TGase added) (comparative sample)

| | Treatment E | MD | Treatment F | MD | Treatment G | MD | Treatment H | MD |
|---|---|---|---|---|---|---|---|---|
| hr | pH | (+/-) | pH | (+/-) | pH | (+/-) | pH | (+/-) |
| 0 | 6.68 | 0.00 | 6.65 | 0.01 | 6.66 | 0.00 | 6.68 | 0.00 |
| 1 | 6.50 | 0.00 | 6.49 | 0.01 | 6.48 | 0.01 | 6.52 | 0.00 |
| 2 | 5.89 | 0.00 | 5.86 | 0.03 | 5.79 | 0.01 | 5.77 | 0.02 |
| 3 | 5.14 | 0.09 | 5.27 | 0.06 | 5.12 | 0.06 | 5.10 | 0.00 |
| 4 | 4.77 | 0.07 | 4.79 | 0.02 | 4.67 | 0.00 | 4.68 | 0.02 |
| 21 | 3.83 | 0.03 | 3.78 | 0.01 | 3.82 | 0.00 | 3.81 | 0.01 |

### Syneresis data

Double determinations are shown in the table below. MD is the mean deviation.

| | Relative syneresis | MD |
|---|---|---|
| | % of total height | (+/-) |
| Treatment A | 3.0 | 0.4 |
| Treatment B | 3.8 | 0.5 |
| Treatment C | 3.0 | 1.1 |
| Treatment D | 2.3 | 0.3 |
| Treatment E | 24.2 | 3.0 |
| Treatment F | 81.6 | 0.1 |
| Treatment G | 82.3 | 0.6 |
| Treatment H | 79.0 | 2.4 |

From the tables (esp. treatment B, C and D) it can be seen that Neutrase treatment boost the fermentation, i.e. reduces the fermentation time. Interesting, comparison of data from treatment B and E shows that the fermentation time for TGase and Neutrase treated milk is the same as the untreated sample.

### REFERENCES

EP1197152B (Ajinomoto), EP1624761B1 (Danone), US2009061046A (NovoZymes)

## Claims

1. A method for producing an acidified milk product, said method comprising:
a) providing a milk substrate;
b) treating the milk substrate with an enzyme having transglutaminase activity; and
c) fermenting the milk substrate with a microorganism; wherein the enzyme having transglutaminase activity is added at least 30 minutes after the fermentation has started.

2. The method of claim 1, further comprising the addition of a protein hydrolyzate and/or a protease to the milk substrate.

3. The method of claim 2, wherein the protein hydrolyzate is selected from the group consisting of: a milk protein hydrolyzate; a peptone (such as potato peptone); a yeast extract; and hydrolyzed yeast extract.

4. The method of claim 2, wherein the hydrolyzate is selected from the group consisting of milk protein hydrolyzate, casein hydrolyzate, whey protein hydrolyzate, said hydrolyzate being e.g. an acid hydrolyzate or an enzymatic hydrolyzate.

5. The method of any of claims 2-3, wherein the protein hydrolyzate is added in a concentration (w/w) in the range of 0.01% to 3.00%, such as in the ranges: 0.05% to 1.00%. 0.08% to 0.50%, or 0.09% to 0.30%.

6. The method of any of claims 2-5, wherein the protease is selected from the group consisting of: a serine protease, a Bacillus protease, a Cysteine protease, an Aspartic protease, a metalloprotease, a protease classified in EC 3.4.-.-, a protease classified in EC 3.4.21.- (e.g. in EC 3.4.21.62), a protease classified in EC 3.4.22.-, a protease classified in EC 3.4.23.-, a protease classified in EC 3.4.24.- (e.g. EC 3.4.24.28), Neutrase^{®}, Alcalase^{®}, subtilisin A (Type VIII), Colorase N, Optimase or Protease N "Amano".

7. The method of any of claims 2-6, wherein the protease is added in a concentration (w/w) in the range of 0.00001% to 5%, such as in the ranges: 0.0001% to 1%, 0.0001% to 0.5%, or 0.001% to 0.1%.

8. The method of any of the preceding claims, wherein the enzyme having transglutaminase activity is added at least 40 minutes, 50 minutes, 60 minutes, 70 minutes, 80 minutes, or 120 minutes) after start of fermentation.

9. The method of any of the preceding claims, wherein glutathione is added to the milk substrate prior to treatment with the enzyme having transglutaminase activity.

10. The method of any of the preceding claims, wherein the microorganism is a lactic acid bacterium.

11. The method of any of the preceding claims, wherein the acidified milk product is selected from the group consisting of: a fermented milk drink, a fermented set-type product (e.g. a set-type yoghurt), and a fermented spoonable product (e.g. a spoonable yoghurt).

12. The method of any of the preceding claims, wherein the fermented milk substrate (obtained in step c) is diluted at least 1.5 times (with e.g. water, milk or milk substrate) to obtain an acidified milk drink.

13. The method of claim 12, wherein the acidified milk drink has a milk solid non-fat content of less than 8%.

14. Use of a protein hydrolyzate and/or a protease for decreasing the fermentation time of a milk substrate treated with transglutaminase.

## Patentansprüche

1. Verfahren zur Herstellung eines gesäuerten Milchprodukts, bei dem man
a) ein Milchsubstrat bereitstellt;
b) das Milchsubstrat mit einem Enzym behandelt, das eine Transglutaminase-Aktivität aufweist; und
c) das Milchsubstrat mit einem Mikroorganismus fermentiert;
wobei man das Enzym, welches Transglutaminase-Aktivität aufweist, mindestens 30 Minuten nachdem die Fermentation begonnen hat zufügt.

2. Verfahren gemäß Anspruch 1, wobei man ferner ein Protein-Hydrolysat und/oder eine Protease zu dem Milchsubstrat gibt.

3. Verfahren gemäß Anspruch 2, wobei das Protein-Hydrolysat ausgewählt ist aus der Gruppe bestehend aus einem Milchprotein-Hydrolysat; einem Pepton (wie z.B. einem Kartoffel-Pepton); einem Hefeextrakt; und einem hydrolysierten Hefeextrakt.

4. Verfahren gemäß Anspruch 2, wobei das Hydrolysat ausgewählt ist aus der Gruppe bestehend aus einem Milchprotein-Hydrolysat, einem Casein-Hydrolysat, einem Molkeprotein-Hydrolysat, wobei das Hydrolysat beispielsweise ein Säure-Hydrolysat oder ein enzymatisches Hydrolysat ist.

5. Verfahren gemäß einem der Ansprüche 2-3, wobei das Protein-Hydrolysat in einer Konzentration (Gew./Gew.) im Bereich von 0,01% bis 3,00%, z.B. in den Bereichen von: 0,05% bis 1,00%, 0,08% bis 0,50% oder 0,09% 0,30% zugegeben wird.

6. Verfahren gemäß einem der Ansprüche 2-5, wobei die Protease ausgewählt ist aus der Gruppe bestehend aus: einer Serin-Protease, einer Bacillus-Protease, einer Cystein-Protease, einer Aspartat-Protease, einer Metalloprotease, einer in EC 3.4.-.- klassifizierten Protease, einer in EC 3.4.21.- klassifizierten Protease (z.B. in EC 3.4.21.62), einer in EC 3.4.22.- klassifizierten Protease, einer in EC 3.4.23.- klassifizierten Protease, einer in EC 3.4.24.- klassifizierten Protease (z.B. EC 3.4.24.28), Neutrase®, Alcalase®, Subtilisin A (Typ VIII), Colorase N, Optimase oder Protease N "Amano".

7. Verfahren gemäß einem der Ansprüche 2-6, wobei die Protease in einer Konzentration (Gew./Gew.) im Bereich von 0,00001% bis 5%, wie beispielsweise in den Bereichen von: 0,0001% bis 1%, 0,0001% bis 0,5% oder 0,001% bis 0,1% zugegeben wird.

8. Verfahren gemäß einem der vorhergehenden Ansprüche, wobei man das Enzym, welches Transglutaminase-Aktivität aufweist, mindestens 40 Minuten, 50 Minuten, 60 Minuten, 70 Minuten, 80 Minuten oder 120 Minuten nach Start der Fermentation zugibt.

9. Verfahren gemäß einem der vorhergehenden Ansprüche, wobei man vor der Behandlung mit dem Enzym, welches Transglutaminase-Aktivität aufweist, Glutathion zu dem Milchsubstrat gibt.

10. Verfahren gemäß einem der vorhergehenden Ansprüche, wobei der Mikroorganismus ein Milchsäurebakterium ist.

11. Verfahren gemäß einem der vorhergehenden Ansprüche, wobei das gesäuerte Milchprodukt ausgewählt ist aus der Gruppe bestehend aus: einem fermentierten Milchgetränk, einem fermentierten stichfestem (set-type) Produkt (z.B. einem stichfestem Joghurt), und einem fermentierten löffelbaren Produkt (z.B. einem löffelbaren Joghurt).

12. Verfahren gemäß einem der vorhergehenden Ansprüche, wobei das (in Schritt c erhaltene) fermentierte Milchsubstrat mindestens 1,5-fach verdünnt wird (z.B. mit Wasser, Milch oder Milchsubstrat), um ein angesäuertes Milchgetränk zu erhalten.

13. Verfahren gemäß Anspruch 12, wobei das gesäuerte Milchgetränk einen Milch-Feststoff-Nicht-Fettgehalt von weniger als 8% aufweist.

14. Verwendung eines Protein-Hydrolysats und/oder einer Protease zur Verringerung der Fermentationszeit eines Milchsubstrats, das mit Transglutaminase behandelt wurde.

## Revendications

1. Méthode de production d'un produit lacté acidifié, ladite méthode comprenant:
A) fournir un substrat de lait;
B) traiter le substrat de lait avec une enzyme ayant une activité de transglutaminase; et
C) fermenter le substrat de lait avec un micro-organisme;
où enzyme ayant une activité de transglutaminase est ajoutée au moins 30 minutes après que la fermentation a commencé.

2. Méthode de la revendication 1, comprenant en outre l'addition d'un hydrolysat de protéines et/ou une protéase au substrat de lait.

3. Méthode de la revendication 2, où l'hydrolysat de protéines est sélectionné du groupe composé de: un hydrolysat de protéines de lait; une peptone (comme par exemple peptone de pomme de terre); un extrait de levure; et extrait de levure hydrolysé.

4. Méthode de la revendication 2, où l'hydrolysat est sélectionné du groupe composé d'hydrolysat de protéines de lait, hydrolysat de caséine, hydrolysat de protéines de petit-lait, ledit hydrolysat étant par ex. un hydrolysat acide ou un hydrolysat enzymatique.

5. Méthode de l'une quelconque des revendications 2 -3, où l'hydrolysat de protéines est ajouté dans une concentration (p/p) comprise entre 0,01 % et 3,00 %, comme par exemple comprise entre: 0,05 % et 1,00 %, 0,08 % et 0,50 %, ou 0,09 % et 0,30 %.

6. Méthode de l'une quelconque des revendications 2 -5, où la protéase est sélectionnée du groupe composé de: une protéase à sérine, une protéase de Bacillus, une protéase à cystéine, une protéase aspartique, une métalloprotéase, une protéase classée en EC 3.4.-.-, une protéase classée en EC 3.4.21.- (par ex. en EC 3.4.21.62), une protéase classée en EC 3.4.22.-, une protéase classée en EC 3.4.23.-, une protéase classée en EC 3.4.24.- (par ex. EC 3.4.24.28), Neutrase®, Alcalase®, subtilisine A (Type VIII), Colorase N, Optimase ou Protéase N "Amano".

7. Méthode de l'une quelconque des revendications 2-6, où la protéase est ajoutée dans une concentration (p/p) comprise entre 0,00001 % et 5 %, comme par exemple comprise entre: 0,0001 % et 1 %, 0,0001 % et 0,5%, ou 0,001 % et 0,1 %.

8. Méthode d'une quelconque des revendications précédentes, où enzyme ayant une activité de transglutaminase est ajoutée au moins 40 minutes, 50 minutes, 60 minutes, 70 minutes, 80 minutes, ou 120 minutes) après le début de la fermentation.

9. Méthode d'une quelconque des revendications précédentes, où le glutathion est ajouté au substrat de lait avant le traitement avec enzyme ayant une activité de transglutaminase.

10. Méthode d'une quelconque des revendications précédentes, où le micro-organisme est une bactérie d'acide lactique.

11. Méthode de l'une quelconque des revendications précédentes, où le produit lacté acidifié est sélectionné du groupe composé de: une boisson lactée fermentée, un produit de type ferme fermenté (par ex. un yaourt de type ferme), et un produit cuillérable fermenté (par ex. un yaourt cuillérable).

12. Méthode d'une quelconque des revendications précédentes, où le substrat de lait fermenté (obtenu dans la phase c) est dilué au moins 1,5 fois (avec par ex. de l'eau, lait ou substrat de lait) pour obtenir une boisson lactée acidifiée.

13. Méthode de la revendication 12, où la boisson lactée acidifiée a une teneur en matière solide non graisse du lait inférieure à 8 %.

14. Utilisation d'un hydrolysat de protéines et/ou une protéase pour diminuer le temps de fermentation d'un substrat de lait traité avec transglutaminase.
